# EUROPEAN PATENT APPLICATION

(11) **EP 2 202 627 A1**
(43) Date of publication of application: **30.06.2010**
(21) Application number: 08840044.5
(22) Date of filing: 08.10.2008
(51) Int. Cl.: G06F 3/048, H04M 1/00, H04M 1/247

(54) **MOBILE TERMINAL DEVICE AND DISPLAY METHOD**

(30) Priority: 17.10.2007 JP 2007270028
(71) Applicant: Nec Corporation, Tokyo 108-8001 (JP)
(72) Inventor: KURAMATSU, Hiroyasu, Tokyo 108-8001 (JP)
(74) Representative: Betten & Resch
(86) International application number: PCT/JP2008/068303
(87) International publication number: WO 2009/051048

(57) **Abstract**

An object of the present invention is to provide a mobile terminal apparatus and a display method which can grasp a state of operation of the apparatus easily.

A mobile terminal apparatus comprising a state checking means for checking a state of a function of the mobile terminal apparatus and a listing and displaying means for displaying a check result which is obtained by said state checking means on an image displaying unit and a display method comprising checking a state of a function of the mobile terminal apparatus and displaying a check result obtained by the checking on an image displaying unit can realize the object.

## Description

### [TECHNICAL FIELD]

The present invention relates to a mobile terminal apparatus and a display method, and in particular, relates to a mobile terminal apparatus and a display method which display a list of information on various statuses.

### [BACKGROUND ART]

Nowadays, a mobile terminal apparatus such as a cellular phone and PHS includes not only telephony (verbal communication function) but also functions such as e-mail, game, a convenient tool function such as a pedometer or a stopwatch, Music Player, Bluetooth communication, WLAN communication. As a method to display a state of operating the function to the user, an art that displays an icon for the e-mail function (for example, refer to the patent document 1) and an art that displays e-mail reception information on a popup window which is displayed on a screen of the mobile terminal apparatus when the e-mail is received and selects the information in order to read the e-mail are well known.

However, there are some problems that, in the case that a plurality of events occur simultaneously and an image on the screen is changed to an image of a certain event, the popup in the image is deleted and consequently, other events can not be recognized, and that the icon is too small to be recognized while an icon is displayed, and that the icon can not be recognized since a plurality of similar icons are displayed in the same image, and that the icon can not be understood in the case that the icon is seldom used.

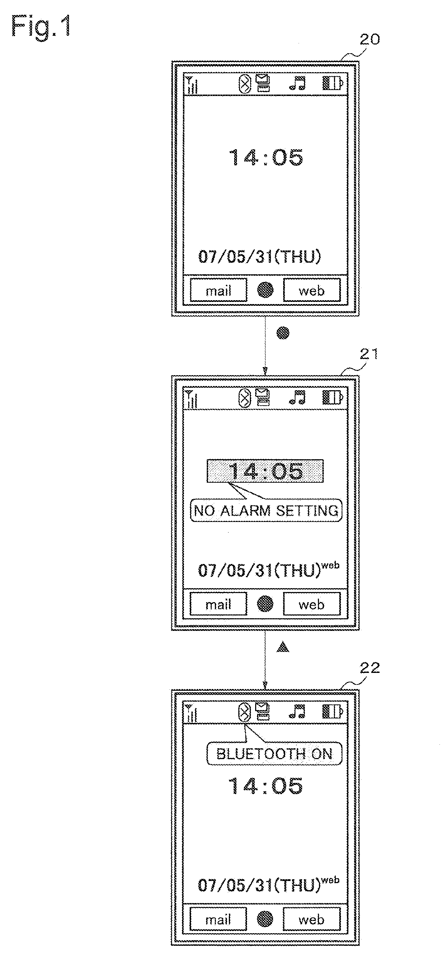

Then, a function to display meaning of an icon which is pointed by a cursor is proposed (refer to FIG. 1). Moreover, an art that information on, for example, an unread e-mail is displayed at a time when a flip of a folding type cellular phone enters into an open state from a close state is well known(for example, refer to the patent document 2).
[Patent document 1] Japanese Patent Application Laid-Open No. 2003-304320
[Patent document 2] Japanese Patent Application Laid-Open No. 2006-279664

### [DISCLOSURE OF THE INVENTION]

### [PROBLEM TO BE SOLVED BY THE INVENTION]

However, the above-mentioned arts are caused the following problems. According to the art that displays meaning of an icon which is pointed by a cursor, it is necessary to return to a standby image to recognize meaning of the icon when game, e-mailing and so on are carried out, because the icon is displayed only in the standby image. According to the art that information on, for example, the unread e-mail is displayed at a time when the flip of the folding type cellular phone enters into the open state from the close state, the information on the unread e-mail is displayed only at the time when the flip is opened. Moreover, information on all e-mails which have unread statuses is displayed even if it is unnecessary to read the unread e-mail which is received the previous day and consequently becomes old.

According to the well known cellular phone which can activate a plurality of tasks simultaneously, Music Player, Bluetooth, stopwatch, JAVA (registered trademark) or the like may work with no notice of user (for example, at the back of e-mail reading and writing, web surfing and picture reading). In this case, electric power is consumed unnecessarily and life span of a battery of the mobile terminal apparatus becomes short.

The object of the present invention is to provide a mobile terminal apparatus and a display method which can grasp the state of operation of the apparatus easily.

### [MEANS FOR SOLVING THE PROBLEM]

A first apparatus according to the present invention is a mobile terminal apparatus which comprises a state checking means for checking a state of a function of the mobile terminal apparatus and a listing and displaying means for displaying the check result which is obtained by the state checking means on an image displaying unit.

A first method according to the present invention is a display method comprising checking a state of a function of the mobile terminal apparatus and displaying the check result obtained by the checking on an image displaying unit.

### [THE EFFECT OF THE INVENTION]

According to the present invention, it is possible to provide the mobile terminal apparatus and the display method which can grasp the operation state of the apparatus easily.

### [BEST MODE FOR CARRYING OUT THE INVENTION]

An exemplary embodiment of the present invention will be described in detail with reference to a drawing in the following. Further, the exemplary embodiment of the present invention described in the following is one of preferable embodiments and includes various restrictions which are preferable technically. However, the scope of the present invention is not limited by these restrictions, as far as in the following description there is no particular description that the present invention is restricted.

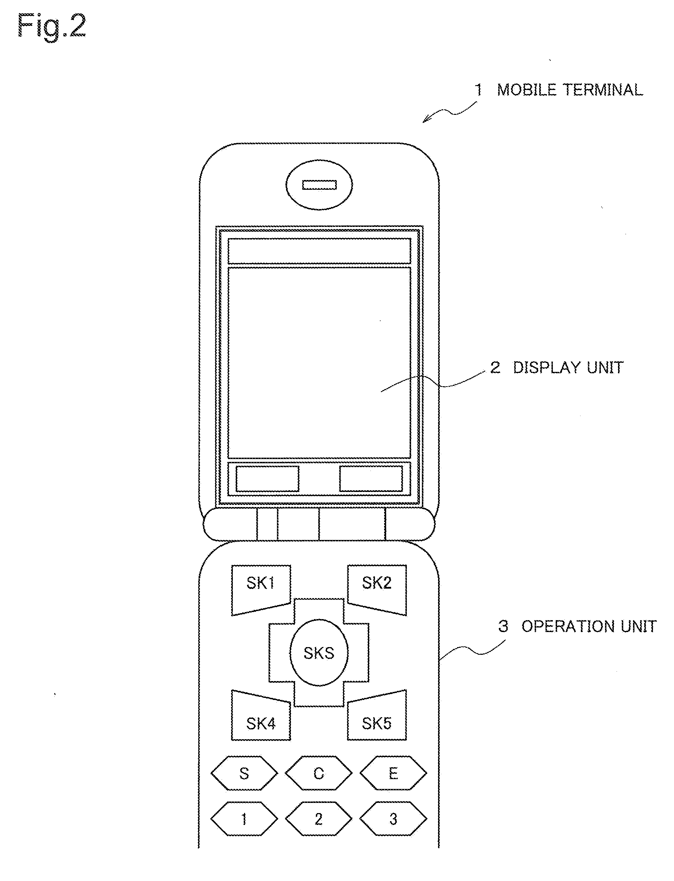

FIG. 2 shows an example of device arrangement of a mobile terminal apparatus 1 according to the exemplary embodiment of the present invention. The mobile terminal apparatus 1 includes at least a display unit 2 and an operation unit 3. Here, according to the present invention, device arrangement is not limited to the device arrangement shown in FIG. 2. The present invention includes a mobile terminal apparatus which has different device arrangement from one of the mobile terminal apparatus shown in FIG. 2, such as a straight type mobile terminal apparatus and a slide type mobile terminal apparatus.

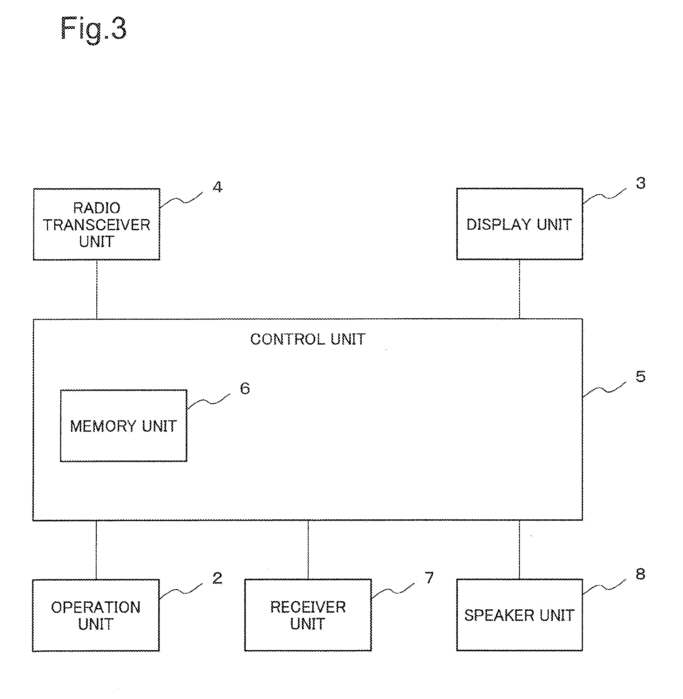

FIG. 3 shows a block configuration of the mobile terminal apparatus according to the exemplary embodiment of the present invention. The mobile terminal apparatus 1 includes at least a radio transceiver unit 4, a display unit 3, a control unit 5 including a memory 6 in which a program or the like is stored, an operation unit 2 including a key switch or the like, a receiver unit 7 and a speaker unit 8.

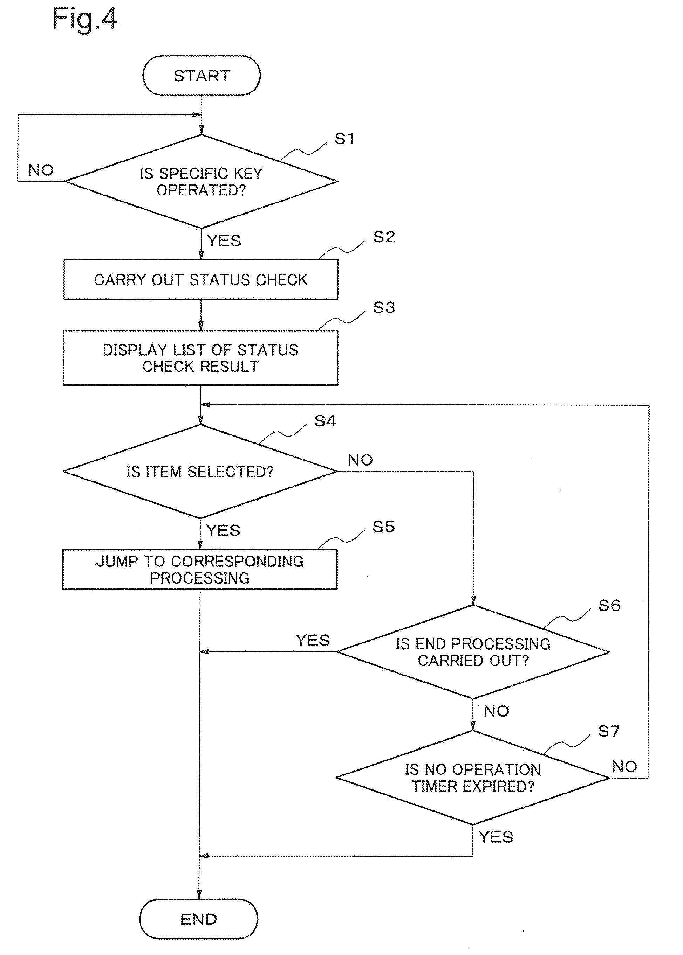

Next, an operation of the mobile terminal apparatus will be described according to the exemplary embodiment of the present invention. FIG. 4 is a flowchart showing an operation according to the exemplary embodiment of the present invention. In the exemplary embodiment, various kinds of status (states of the various functions of the mobile terminal apparatus) are checked by a specific key operation, and a list of the check result is displayed. When a requisite item is selected from the list, jump to the corresponding function of the item is carried out. Hereinafter, detail will be described.

In the case that the specific key is operated (yes in step S1), various kinds of status are checked (step S2). Here, the specific key is a key for starting the status check. A dedicated key or an operation of pushing long time an existing key such as a determination key and a menu key can be applied to the specific key. It is desirable that the operation of the specific key may be carried out even if any kind of the image is displayed on the screen. According to the exemplary embodiment of the present invention, it is assumed that pushing the determination key (• key) for a long time is defined as the operation of the specific key.

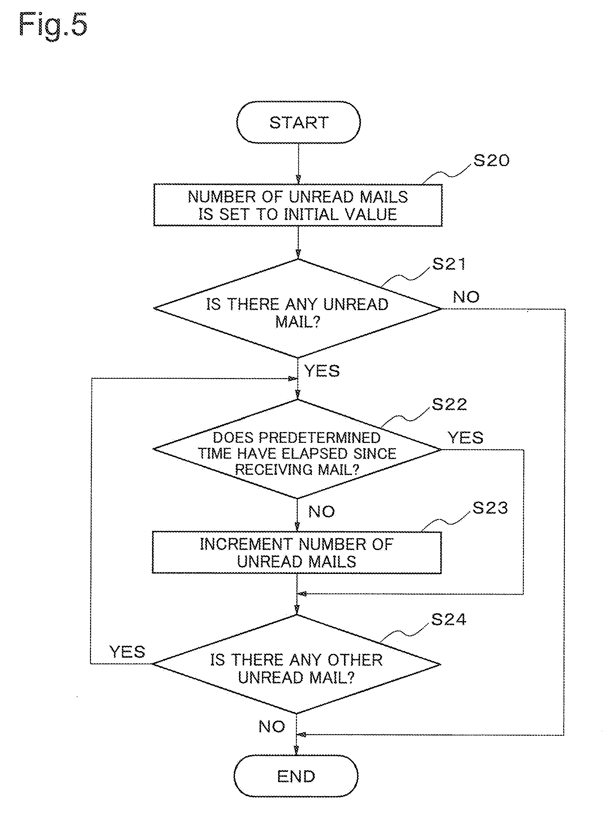

The status check means to check the state of operation based on each of the various functions of the mobile terminal apparatus, and specifically, to carry out operations shown in FIGs. 5 to 13. The operations shown in FIGs. 5 to 13 are exemplified as the status check and it is not necessary to carry out all operations as the status check. Therefore, it may be preferable to select the operation as the status check in advance on the basis of user request.

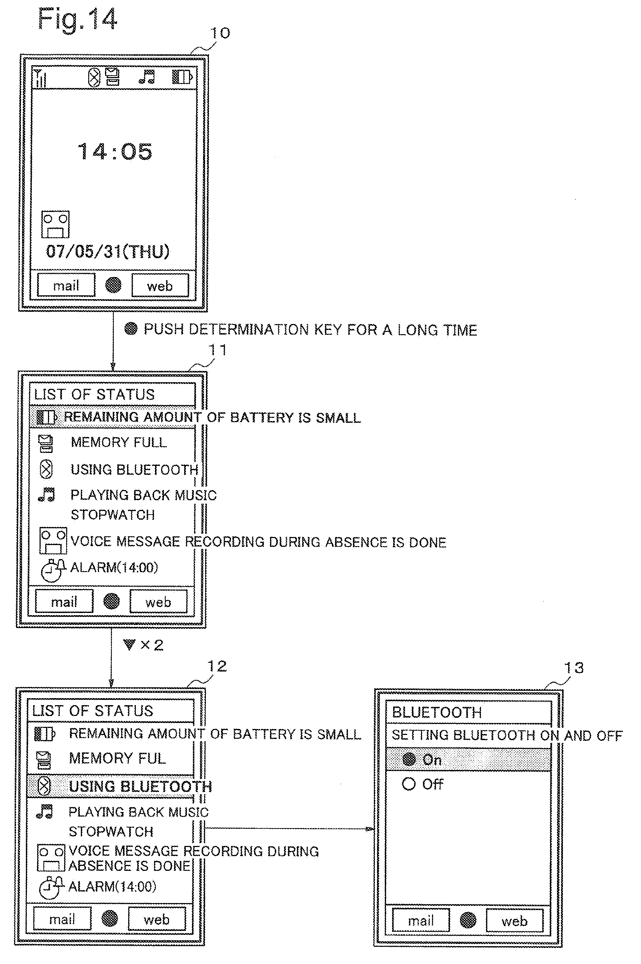

FIG. 14 shows an exemplified image displayed on the display unit 2 of the mobile terminal according the exemplary embodiment of the present invention. A plurality of icons is displayed on a status bar in a standby image 10. Moreover, an icon which indicates a voice message recording during absence is also displayed in the standby image on the screen.

In the case that function of a specific key is corresponding to pushing long time the determination key, the status check is carried out and the image on the screen is changed to a status list image 11 from the standby image 10 by pushing long time the determination key (• is determination key in the figure). As a result of the status check, the following status is displayed in the status list image 11. Then, remaining amounts of a battery and a memory as an abnormality and alarm item, Bluetooth, playing back music and stopwatch as a task influencing life span of the battery, and alarm notification (14:00) as information, are displayed in the status list image 11. After checking these items, user may decide to charge the battery because of shortage in the remaining battery, and user may decide to switch off Bluetooth since it is unnecessary to use Bluetooth, etc. In these cases, user can select an item to be operated from the status list. For example, a cross key which is arranged in the operation unit is moved downward (▼ key is pushed) in order that the cursor points at an item to be selected. In the case that Bluetooth is requested to be switched off, the cursor falls by two steps by pushing the ▼ key twice and afterward the image on the screen is changed to a setting image 13 for switching on/off Bluetooth by pushing the ● key.

Here, FIG. 14 shows the operation starts from the standby image 10, but it is possible to call the status list image 11 by pushing long time the ● key or the like from the image which is in any state on the screen, for example, from an image for game (JAVA), a television image. It is well known art that the e-mail arrival is informed to user by a popup during watching television. However, in this case, user may delete the popup and continue watching television to watch television intently. If user wants afterward to check the e-mail during advertising on the television, user can display the status list image 11 by pushing long time the ● key with the television displayed and can read the arrival e-mail by selecting the item indicating the arrival e-mail from the status list image 11. Above mention is an effect of the exemplary embodiment of the present invention.

After the status check, the check result is displayed on the screen (step S3). After the cursor points at an icon to be selected, the icon is selected by pushing the determination key or the like. When the icon is selected (yes in step S4), jump to a processing corresponding to the icon is carried out (step S5). The jump means that the image on the screen is changed to a setting and working image of the corresponding function (selected icon) by short cutting. On the setting and working image, the setting change of the function such as on/off setting of Bluetooth is carried out (refer to the setting image 13 in FIG. 14). Since each of these setting changes is an usual processing, description is omitted.

On the other hand, in the case that any item is not selected after result of the status check is displayed (no in step S4), an end processing is carried out (yes in step S6), or the processing is terminated if no operation timer is expired (yes in step S7).

Next, each of the status checks according to the exemplary embodiment of the present invention will be described (step S2).

### [Checking number of unread e-mails]

FIG. 5 is a flowchart showing a processing of counting number of the unread e-mails. First, number of the unread e-mails is set to zero as an initial value (step S20), and a check on existence of the unread e-mail is carried out (step S21). In the case that the unread e-mail is found (yes in step S21), it is checked whether a predetermined time (for example, 8 hours) has elapsed since the unread e-mail arrival (step S22). In the case that the predetermined time does not elapse (within the predetermined time) (no in step S22), number of the unread e-mails is incremented by one (step S23), and furthermore, a check on existence of other unread e-mail is carried out (yes in step S24).

Processing of steps S22 and S23 is repeated until the unread e-mail can not be found. When the unread e-mail can not be found anymore (no in step S24), the processing for checking number of the unread e-mails is completed.

### [Checking number of calls during absence]

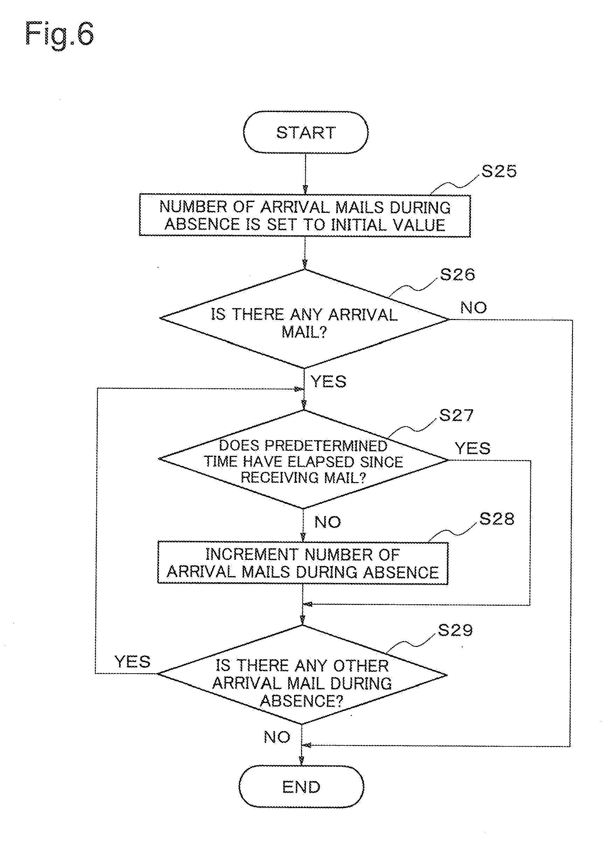

FIG. 6 is a flowchart showing a processing of counting number of the calls during absence. First, number of the calls during absence is set to zero as an initial value (step S25), and a check on existence of the calls during absence is carried out (step S26). In the case that the calls during absence is found (yes in step S26), it is checked whether a predetermined time (for example, 8 hours) has elapsed since the call arrival (step S27). In the case that the predetermined time does not elapse (within the predetermined time) (no in step S27), number of the calls during absence is incremented by one (step S28), and furthermore, a check on existence of other calls during absence is carried out (yes in step S29).

Steps S27 to S29 are repeated until the calls during absence can not be found. When the call during absence can not be found anymore (no in step S29), the processing of checking number of the calls during absence is completed.

### [Checking number of voice message recordings during absence]

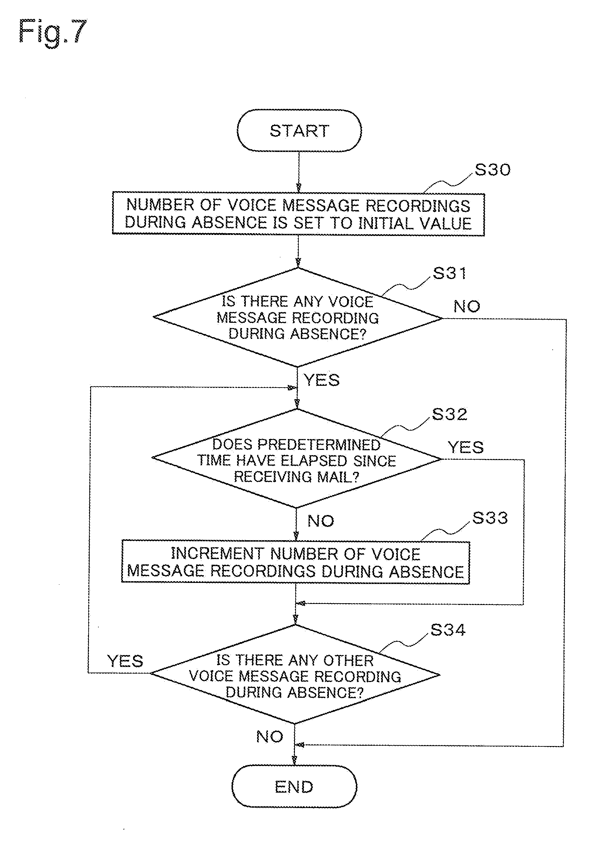

FIG. 7 is a flowchart showing a processing of counting number of the voice message recordings during absence. First, number of the voice message recordings during absence is set to zero as an initial value (step S30), and a check on existence of the voice message recording during absence is carried out (step S31). In the case that the voice message recording during absence is found (yes in step S31), it is checked whether a predetermined time (for example, 4 hours) has elapsed since the voice message recording during absence is recorded (Step S32). In the case that the predetermined time does not elapse (within the predetermined time) (no in step S32), number of the voice message recordings during absence is incremented by one (step S33). Furthermore, a check on existence of other voice message recording is carried out (Step S34).

Steps S32 to S34 are repeated until the voice message recording during absence can not be found. When the voice message recording during absence can not be found anymore (no in step S34), the processing of checking number of the voice message recordings is completed.

### [Checking number of alarm settings]

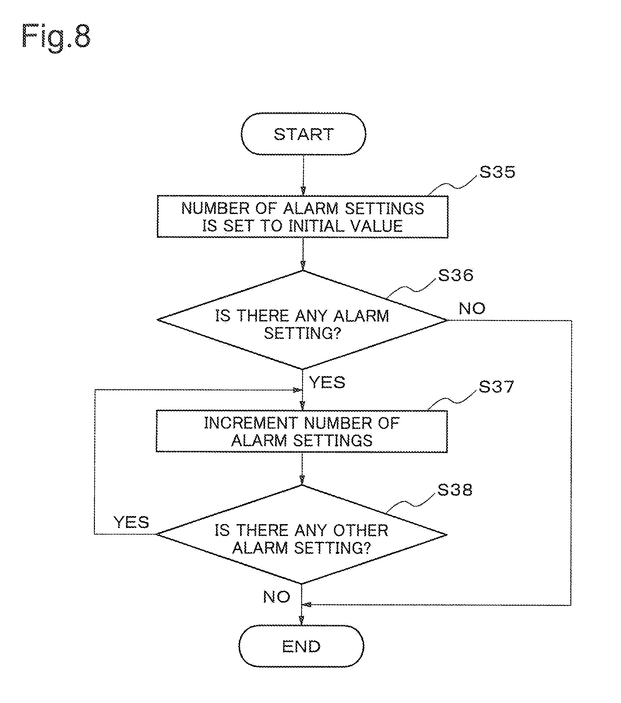

FIG. 8 is a flowchart showing a processing of counting number of the alarm settings. First, number of the alarm setting is set to zero as an initial number (step S35), and a check on existence of the alarm setting is carried out (step S36). In the case that the alarm setting is found (yes in step S36), number of the alarm settings is incremented by one (step S37). Furthermore, a check on existence of other alarm setting is carried out (step S38).

Steps S36 to S38 are repeated until the alarm setting can not be found. When the alarm setting can not found anymore (no in step S38), the processing of checking number of the alarm settings is completed.

### [Checking number of notified alarms]

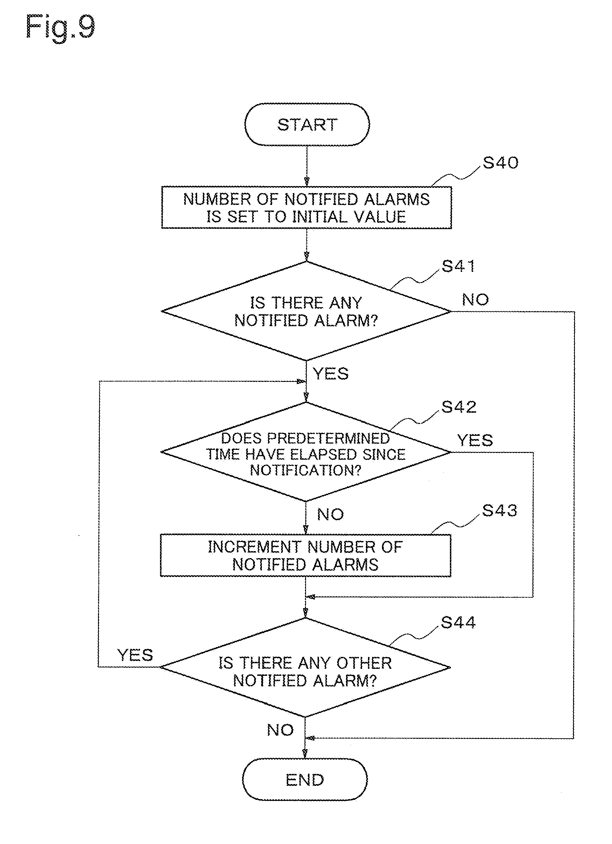

FIG. 9 is a flowchart showing a processing of counting number of the notified alarms. First, number of the notified alarms is set to zero as an initial value (step S40), and a check on existence of the notified alarm is carried out (step S41). In the case that the notified alarm is found (yes in step S41), it is checked whether a predetermined time (for example, 1 hour) has elapsed since the notification alarm arrival (step S42). In the case that the predetermined time does not elapse (within the predetermined time) (no in step S42), number of the notified alarms is incremented by one (step S43). Furthermore, a check on existence of other notified alarm is carried out (step S44).

Steps S41 to S44 are repeated until the notified alarm can not be found. When the notified alarm can not be found anymore (no in step S44), the processing of checking number of the notified alarms is completed.

### [Checking number of schedule settings]

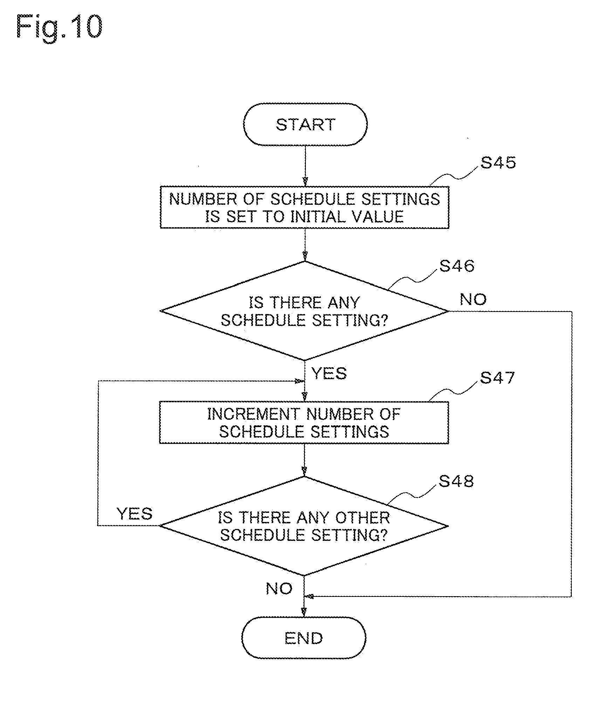

FIG. 10 is a flowchart showing a processing of counting number of the schedule settings. First, number of the schedule settings is set to zero as an initial value (step S45), and a check on existence of the schedule setting is carried out (step S46). In the case that the schedule setting is found (yes in step S46), number of the schedule settings is incremented by one (step S47).

Steps S46 to S48 are repeated until the schedule setting can not be found. When the schedule setting can not be found anymore (no in step S48), the processing of checking number of the schedule settings is completed.

### [Checking number of notified schedules]

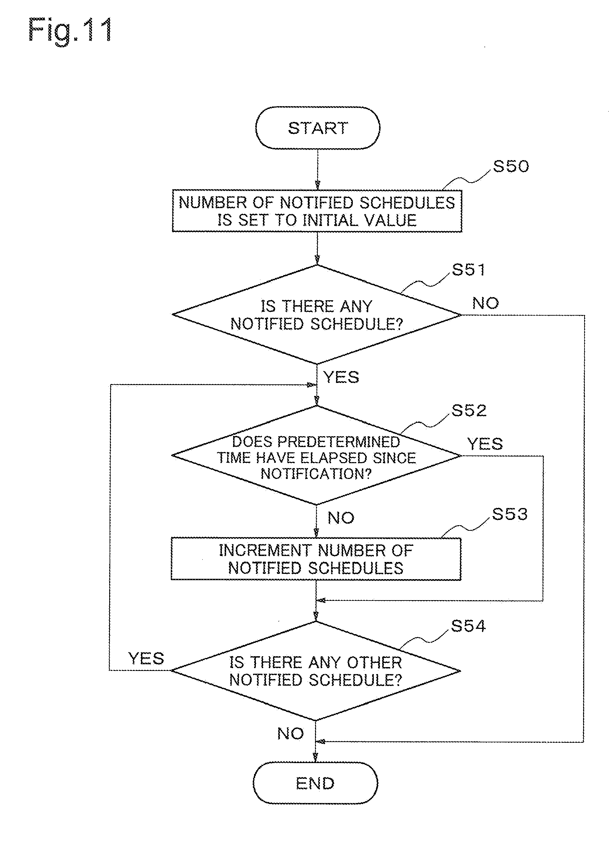

FIG. 11 is a flowchart showing a processing of counting number of the notified schedules. First, number of the notified schedules is set to zero as an initial value (step S50), and a check on existence of the notified schedule is carried out (step S51). In the case that the notified schedule is found (yes in step S51), it is checked whether a predetermined time (for example, 1 hour or scheduled time) has elapsed since the notification arrival (step S52). In the case that the predetermined time does not elapse (within the predetermined time) (no in step S52), number of the notified schedules is incremented (Step S53). Furthermore, a check on existence of other notified schedule is carried out (step S54).

Steps S51 to S54 are repeated until the notified schedule can not be found. When the notified schedule can not be found anymore (no in step S54), the processing of checking number of the notified schedules is completed.

### [Checking existence of abnormality and alarm]

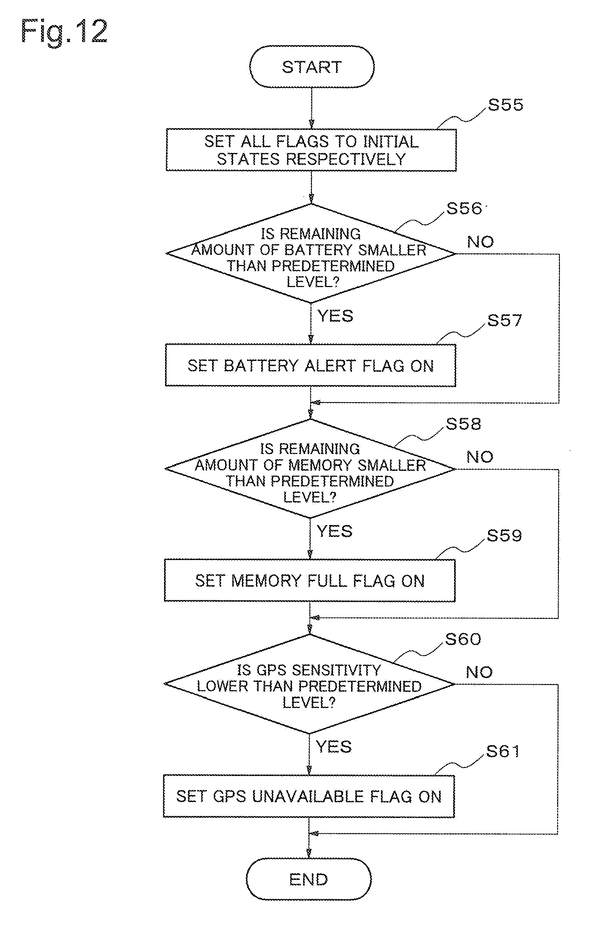

FIG. 12 is a flowchart showing a processing of checking existence of the abnormality and alarm. First, all flags are set to initial states respectively (step S55), and then, it is checked whether the remaining amount of the battery is smaller than a predetermined level (for example, one battery bar, 8 hours or the like as remaining time) (step S56). When the remaining amount of the battery is smaller than the predetermined level (yes in step S56), battery alert flag is set on (step S57). When there is no problem (no in step S56), the processing proceeds to a next check.

Next, it is checked whether the remaining amount of the memory is smaller than a predetermined level (for example, 10% or the like) (step S58). When the remaining amount of the memory is smaller than the predetermined level (yes in step S58), memory full flag is set on (step S59). When there is no problem (no in step S58), the processing proceeds to a next check.

Next, it is checked whether GPS sensitivity is lower than a predetermined level (for example, measurement level 4 or the like) (step S60). When GPS sensitivity is lower than the predetermined level (yes in step S60), GPS unavailable flag is set on (step S58). When there is no problem (no in step S60), the processing is completed.

Further, while the remaining amount of the battery, the remaining amount of the memory and GPS sensitivity are checked as the abnormality and alarm check, the abnormality and alarm check may include, for example, a check on WLAN sensitivity, temperature of terminal apparatus, device failure or the like, besides the check items mentioned above. It is possible to increase or decrease the check items on the basis of the specification of the cellular phone.

### [Checking whether a plurality of tasks are working or not]

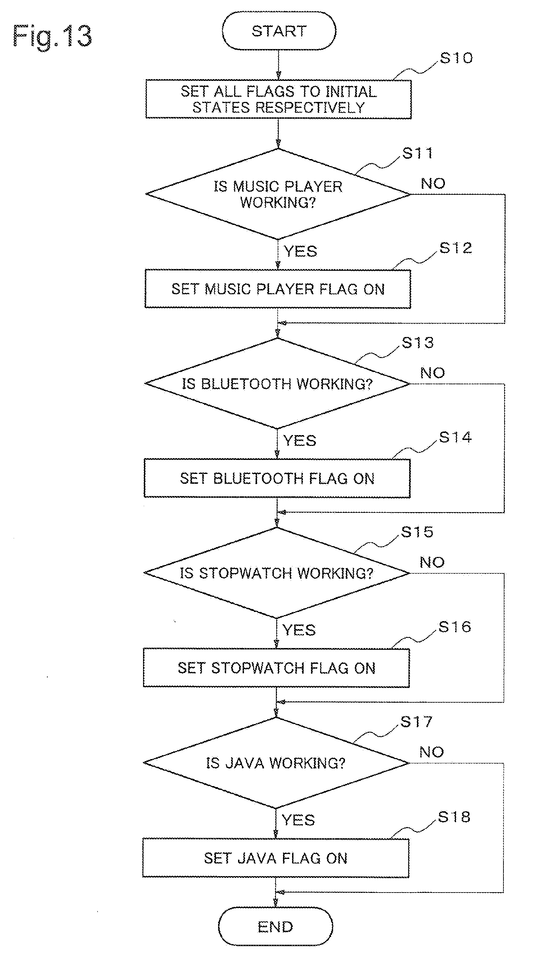

FIG. 13 is a flowchart showing a processing of checking whether a plurality of tasks is working or not. First, all flags are set to initial states respectively (step S10). Then, it is checked whether Music Player is working or not (step S11). In the case that Music Player is working, Music Player flag is set on (step S12). On the other hand, in the case that Music player is not working, the processing proceeds to a next check.

Next, it is checked whether Bluetooth is working or not (step S13). In the case that Bluetooth is working, Bluetooth flag is set on (step S14). On the other hand, in the case that Bluetooth is not working, the processing proceeds to a next check.

Next, it is checked whether stopwatch is working or not (step S15). In the case that stopwatch is working, stopwatch flag is set on (step S16). On the other hand, in the case that stopwatch is not working, the processing proceeds to a next check.

Next, it is checked whether JAVA is working or not (step S17). In the case that JAVA is working, JAVA flag is set on (step S 18). On the other hand, in the case that JAVA is not working, the processing is completed.

Further, Music Player, Bluetooth, stopwatch and JAVA, which are checked as shown in FIG. 13, are selected as an operation which has an influence on life span of the battery of the mobile terminal apparatus. Besides the check item described in the above-mentioned embodiment of the present invention, the check item may include a check on WLAN, television, radio or the like. It is possible to check various operations on the basis of the specification of the mobile terminal apparatus.

According to the exemplary embodiment of the present invention, since the status list is displayed through operating the specific key, it is possible to understand the meaning of the icon and the popup with ease, even if user does not know the meaning of the icon displayed in the standby image or the like, and even if the popup which has been displayed is deleted.

Moreover, since it is possible to display the list of the abnormality and alarm item and the list of the information on the activated task as the status list, in addition to information on, for example, the unread e-mail, the call during absence, the voice message recording during absence, the alarm setting, the notified alarm, the schedule setting, the notified schedule or the like, it is possible to grasp the list of various information with ease.

Since the list displays only unread e-mail which is received within the predetermined period of time before the present point of time out of the received e-mails through operating the specific key, it is possible to avoid a failure in noticing a new unread e-mail which is received recently and which is mixed with the crowd of the unread e-mails.

By displaying the list of the alarm and schedule which are notified within the predetermined period of time before the present point of time, it is possible to reconfirm contents of the notification easily even if the notified alarm and the notified schedule failed to be noticed or the display of the notification is deleted.

When the mobile terminal apparatus which can activate a plurality of tasks simultaneously display the list of only the actually activated task which has influence to life span of the battery by operating the specific key, it is possible for the mobile terminal apparatus to prevent from consuming electric power unnecessarily and from making life span of the battery short due to Music Player, Bluetooth, stopwatch, JAVA (registered trademark) or the like work with no notice of user at the back of the actual operation (e-mail reading and writing, web surfing, picture reading or the like).

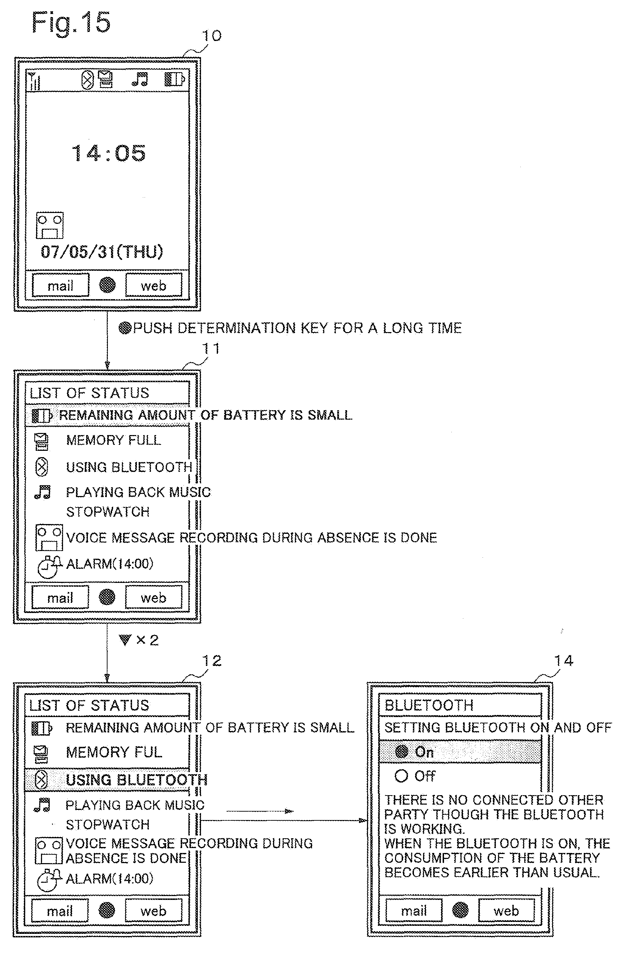

Moreover, FIG. 15 shows an image on the screen, as another exemplary embodiment of the present invention. FIG. 15 is different from FIG. 14 which is referred in the exemplary embodiment mentioned above according to the present invention in a point that a sentence for remark is added to a setting image 14.

According to the another embodiment of the present invention mentioned above, since the image on the screen is changed by selecting an item out of the displayed items and the detailed description on the icon corresponding to the selected item is displayed on the screen, it is possible that user understands the meaning of each item displayed on the screen and consequently user understands what user should do next.

Further, a program according to the present invention includes a program which makes CPU execute the processing of the flowchart described in each of the figures. A semiconductor memory unit, an optical and/or magnetic memory unit or the like can be applied to a storage medium in which the program is stored. Even if the program and the storage medium are used in a system which is different from one of the exemplary embodiment of the present invention, it is possible to obtain the substantially same effect as one of the present invention through CPU, which is included in the system, executing the program mentioned above.

While the present invention has been described specifically on the basis of the preferred exemplary embodiment, the present invention is not limited to the above description, and needless to say, it is possible to amend the present invention within the scope of the present invention.

This application is based upon and claims the benefit of priority from Japanese Patent Application No. 2007-270028, filed on October 17, 2007, the disclosure of which is incorporated herein in its entirety by reference.

### BRIEF DESCRIPTION OF DRAWINGS

FIG. 1 shows an example of a conventional display image.
FIG. 2 shows an example of device arrangement of a mobile terminal apparatus 1 according to an exemplary embodiment of the present invention.
FIG 3 is a block diagram showing a configuration of the mobile terminal apparatus according to the exemplary embodiment of the present invention.
FIG 4 is a flowchart showing an operation according to the exemplary embodiment of the present invention.
FIG. 5 is a flowchart showing a specific operation of a status check according to the exemplary embodiment of the present invention.
FIG. 6 is a flowchart showing a specific operation of the status check according to the exemplary embodiment of the present invention.
FIG. 7 is a flowchart showing a specific operation of the status check according to the exemplary embodiment of the present invention.
FIG. 8 is a flowchart showing a specific operation of the status check according to the exemplary embodiment of the present invention.
FIG. 9 is a flowchart showing a specific operation of the status check according to the exemplary embodiment of the present invention.
FIG. 10 is a flowchart showing a specific operation of the status check according to the exemplary embodiment of the present invention.
FIG. 11 is a flowchart showing a specific operation of the status check according to the exemplary embodiment of the present invention.
FIG. 12 is a flowchart showing a specific operation of the status check according to the exemplary embodiment of the present invention.
FIG. 13 is a flowchart showing a specific operation of the status check according to the exemplary embodiment of the present invention.
FIG. 14 shows an exemplified image displayed by a display unit 2 of the mobile terminal according the exemplary embodiment of the present invention.
FIG. 15 shows an exemplified image displayed by the display unit 2 of the mobile terminal according the exemplary embodiment of the present invention.

### REFERENCE SIGNS LIST

- 1: Mobile terminal apparatus
- 2: Display unit
- 3: Operation unit
- 4: Radio transceiver unit
- 5: Control unit
- 6: Memory unit
- 7: Receiver unit
- 8: Speaker unit
- 10: Standby image
- 11 and 12: Status list image
- 13 and 14: SSetting image

## Claims

1. A mobile terminal apparatus comprising:
a state checking means for checking a state of a function which said mobile terminal apparatus has; and
a listing and displaying means for displaying a list of check result which is obtained by said state checking means on an image displaying unit.

2. The mobile terminal apparatus according to claim 1, wherein
said state checking means starts checking by operation of a specific key.

3. The mobile terminal apparatus according to claim 1 or 2 further comprising:
a display means for displaying an image used for changing a setting of a function which is selected out of functions displayed by said listing and displaying means.

4. The mobile terminal apparatus according to any one of claims 1 to 3 further comprising:
a detailed description displaying means for displaying a detailed description on a function which is selected out of functions displayed by said listing and displaying means.

5. The mobile terminal apparatus according to any one of claims 1 to 4, whereon
said state checking means starts a check by operation of said specific key, even if any kind of image is displayed on said image displaying means.

6. The mobile terminal apparatus according to any one of claims 1 to 5, wherein
said list displaying means displays information on existence of an unread e-mail which is received within a predetermined time.

7. The mobile terminal apparatus according to any one of claims 1 to 6, wherein
said list displaying means displays information on existence of a notified alarm and a notified schedule which are notified within a predetermine time.

8. The mobile terminal apparatus according to any one of claims 1 to 7, wherein
said list displaying means displays information on a task which is activated actually out of tasks which have influence to life span of a battery.

9. The mobile terminal apparatus according to any one of claims 1 to 8, wherein
said list displaying means displays at least one information out of information on existence of an unread e-mail, a call during absence, a voice message recording during absence, an alarm setting, a notified alarm, a schedule setting and a notified schedule, an abnormality and alarm item, and information on an activated task.

10. The mobile terminal apparatus according to any one of claims 1 to 9 further comprising:
a setting means for setting a function which is an object of a state check carried out by said state checking means in advance.

11. A display method comprising:
checking a state of a function of a mobile terminal apparatus; and
displaying a list of check result which is obtained in said check step on an image displaying unit of the mobile terminal apparatus.

12. The display method according to claim 11, wherein
said checking is started by operation of a specific key.
